# EUROPÄISCHE PATENTSCHRIFT

(11) **EP 1 995 513 B1**
(45) Veröffentlichungstag und Bekanntmachung des Hinweises auf die Patenterteilung: **21.10.2015**
(21) Anmeldenummer: 08101709.7
(22) Anmeldetag: 18.02.2008
(51) Int. Cl.: F21V 17/10, G02B 27/62, G02B 7/00, G02B 7/182, F21Y 101/02

(54) **Verfahren zur Montage einer LED-Leuchte**
Method for mounting an LED
Procédé destiné au montage d'une lampe à DEL

(30) Priorität: 22.05.2007 EP 07108613
(43) Veröffentlichungstag der Anmeldung: 26.11.2008
(73) Patentinhaber: Goodrich Lighting Systems GmbH, 59557 Lippstadt (DE)
(72) Erfinder: Hessling, Andre, 55179 Vallendar (DE); Lüder, Sascha, 33397 Rietberg (DE); Griesbach, Martin, 59423 Unna (DE); Ferling, Sonja, 33098 Paderborn (DE)
(74) Vertreter: Klunker . Schmitt-Nilson . Hirsch

(56) Entgegenhaltungen:
- EP-A- 0 420 214
- EP-A1- 0 481 877
- WO-A-01/02775
- FR-A1- 2 767 928
- US-A- 4 237 474
- US-A- 4 500 165

## Beschreibung

Die Erfindung betrifft ein Verfahren zur Montage einer LED-Leuchte, bei der es sich um eine Lese- oder Sitzplatzleuchte für ein Fahrzeug, wie beispielsweise ein Flugzeug, Zug oder einen Reisebus, handelt und die ein LED-Modul und eine reflektive (z.B. Reflektor) und/oder refraktive (z.B. Linse) optische Einheit aufweist.

Die Spezifikation von Leuchten beinhaltet üblicherweise Anforderungen hinsichtlich Helligkeit, Farbe und Lichtverteilung. Die Leuchten weisen neben einem Leuchtmittel auch optische Systeme, zu denen beispielsweise Reflektoren und/ oder Linsen gehören, auf. Dabei sollen die optischen Systeme zur Erzielung einer geringen Bautiefe der Leuchte möglichst klein sein.

Wegen der Wartungsfreundlichkeit und relativ langen Lebensdauer werden für Lese- oder Sitzplatzleuchten von Fahrzeugen, wie beispielsweise Flugzeugen, in zunehmendem Maße LEDs als Leuchtmittel eingesetzt.

Bei vielen kommerziell verfügbaren LEDs weisen die Dies relativ große Lagetoleranzen, insbesondere in Richtung der optischen Achse auf. Die für die Leuchten verwendeten optischen Systeme sind ebenfalls bezüglich Lage, Form und ihrer optischen Eigenschaften Toleranzen unterworfen, und zwar bezüglich Effizienz, Glanzgrad und Abbildungsgenauigkeit.

Bei opto-elektronischen Systemen zur Einkopplung von elektromagnetischer Strahlung einer LED oder Laserdiode in eine optische Faser ist es bekannt, die Faser längs ihrer Achse relativ zur LED bzw. Laserdiode zu verschieben, bis die eingekoppelte Strahlungsintensität einer Vorgabe entspricht. Beispiele hierfür finden sich in FR-A-2 767 928, US-A-4,237,474, US-A-4,500,165 und US-A-5,177,807. Diese bekannten Systeme eignen sich jedoch nicht für die Montage von LED-Leuchten, zum Ausleuchten von Flächen oder Räumen, wie es bei Lese- oder Sitzplatzleuchten für ein Fahrzeug, wie beispielsweise ein Flugzeug, Zug oder einen Reisebus der Fall ist.

Aufgabe der Erfindung ist es, die Montage von LED-Leuchten zur Verringerung der Ausschussrate zu verbessern.

Zur Lösung dieser Aufgabe wird mit der Erfindung ein Verfahren zur Montage einer ein LED-Modul und eine reflektive und/oder refraktive optische Einheit aufweisenden LED- Lese- oder Sitzplatzleuchte für ein Fahrzeug, wie beispielsweise einen Reisebus, Zug oder ein Flugzeug, vorgeschlagen, wobei das Verfahren die in Anspruch 1 angegebenen Schritte aufweist.

Bei dem erfindungsgemäßen Verfahren werden bei der Montage einer LED-Leuchte deren LED-Modul und optische Einheit zur Erzielung einer gewünschten Lichtintensität längs der optischen Achse der LED-Leuchte relativ zueinander bewegt, bis eine Relativposition beider Komponenten gefunden worden ist, bei der die geforderte Intensität des Lichts gegeben ist. Hierbei werden ein LED-Modul, das mindestens eine LED aufweist, und eine optische Einheit, die ein refraktives und/ oder ein reflektives Element umfasst, entlang der optischen Achse der LED-Leuchte zwecks späterer Fixierung angeordnet. Das LED-Modul wird zur Aussendung elektromagnetischer Strahlung angesteuert, die mittels der optischen Einheit zur Ausleuchtung einer Messfläche dient. Diese Strahlung wird mit Hilfe eines Detektors zumindest teilweise erfasst. Anschließend erfolgt eine Relativbewegung der beiden Komponenten der LED-Leuchte, und zwar solange, bis der Detektor eine Strahlungsintensität erfasst, die der gewünschten Strahlungsintensität im gewünschten Abstand zur LED-Leuchte entspricht. In der diese Strahlungsintensität liefernden Relativposition beider Komponenten werden diese aneinander fixiert, womit der Montagevorgang der LED-Leuchte abgeschlossen ist.

Durch das erfindungsgemäße Verfahren können insbesondere Lagetoleranzen in Erstreckung der optischen Achse sowohl des LED-Moduls als auch der optischen Einheit kompensiert werden. Der Montagevorgang kann automatisiert ablaufen. Die Fixierung beider Komponenten relativ zueinander kann mit den heute üblichen Methoden, also mit Hilfe von entsprechenden Verbindungselementen oder auch durch Kleben erfolgen.

Zweckmäßigerweise wird zur dauerhaften Verbindung beider Komponenten der LED-Leuchte aushärtbare Klebermasse verwendet. Diese Klebermasse kann appliziert werden, nachdem die der gewünschten Lichtintensität entsprechende Relativpositionierung beider Komponenten während der Messphase des erfindungsgemäßen Montageverfahrens gefunden worden ist. Die Aushärtung der Klebermasse erfolgt zweckmäßigerweise durch UV-Bestrahlung. Aushärtungsarten, wie beispielsweise die Aushärtung durch Aussetzung der Klebemasse in Umgebungsluft sind ebenfalls möglich.

Zweckmäßig ist es allerdings, wenn die Klebermasse vor dem Bewegen der beiden Komponenten relativ zueinander entlang der optischen Achse auf mechanische Kontaktstellen zwischen dem LED-Modul und der optischen Einheit appliziert werden. Hierbei wird dann zu Beginn der Relativpositionierung ein mechanischer Kontakt von LED-Modul und optischer Einheit mit der Klebermasse erzielt. Dazu können die beiden Komponenten aufeinander zu bewegt werden, so dass es zu einem Eintauchen der Verbindungsstellen der optischen Einheit in die Klebermasse kommt, wenn diese zuvor auf das LED-Modul appliziert worden ist. Alternativ kommt es zu einer Kontaktierung der Verbindungsstellen des LED-Moduls mit der Klebermasse, wenn diese zuvor auf die Kontaktstellen der optischen Einheit appliziert worden ist. Werden anschließend die beiden Komponenten zur Ermittlung der für die gewünschte Lichtintensität erforderlichen Relativposition relativ zueinander längs der optischen Achse bewegt, so bleiben die beiderseitigen Kontaktstellen von LED-Modul und optischer Einheit stets in Verbindung mit der Klebermasse, die sich zwischen beiden Komponenten erstreckt, indem sie "in die Länge" gezogen wird. Durch Aushärtenlassen bzw. durch Aushärtung der Klebermasse mittels UV-Strahlung können dann beide Komponenten in der erforderlichen Relativposition aneinander fixiert werden.

Weiterhin sinnvoll für eine automatische Qualitätssicherung sind die Integration von Temperatursensoren, die die Aufheizung der LEDs überwachen und damit eine korrekte thermische Anbindung detektieren, sowie eine automatisierte Überprüfung der verwendeten Komponenten durch optische und elektrische Prüfverfahren und Farbort-Überprüfung, die z.B. in einem Steuerrechner für die jeweiligen Geräte- bzw. Leuchtentypen hinterlegt sind.

Die erfindungsgemäß hergestellte LED-Leuchte wird zu Beleuchtungszwecken genutzt, wobei sie sichtbares Licht aussendet.

Die Erfindung wird nachfolgend anhand eines Ausführungsbeispiels und unter Bezugnahme auf die Zeichnung näher erläutert. Im einzelnen zeigen dabei:
- Fig. 1: einen schematisch dargestellten Mess- und Montageaufbau in derjenigen Phase, in der sich die beiden relativ zueinander zu fixierenden Komponenten der LED-Leuchte zu Beginn des Montagevorgangs befinden,
- Fig. 2: die Situation des Montageaufbaus, in der die beiden Komponenten eine Relativposition zur Kompensation ihrer Toleranzen aufweisen, und
- Fig. 3: der Montageaufbau bei Aushärtung einer die beiden Komponenten relativ zueinander fixierenden Klebermasse.

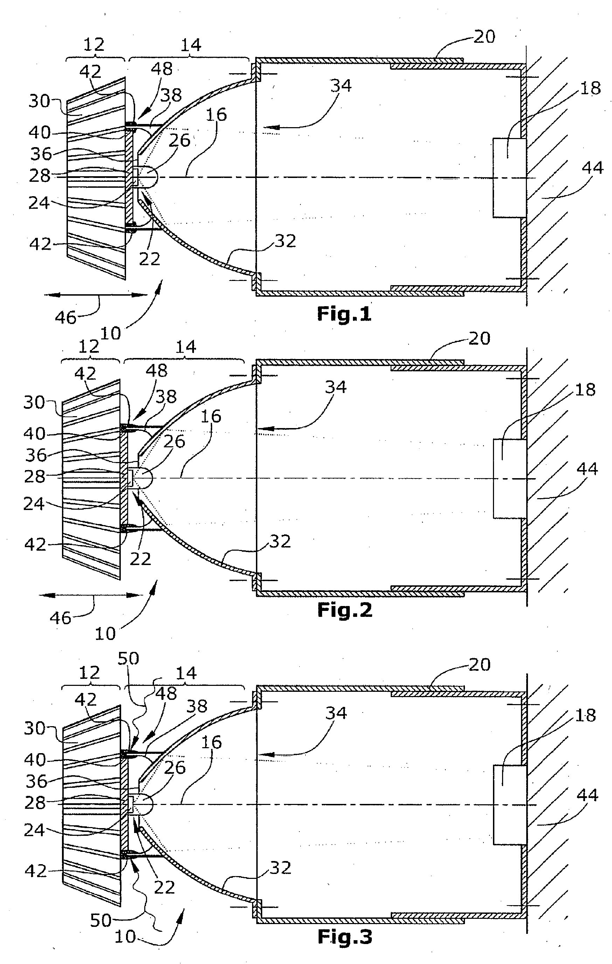

In den Fign. 1 bis 3 ist schematisch ein Montage- und Messaufbau zur automatischen Fixierung zweier Komponenten einer LED-Leuchte gezeigt. Die LED-Leuchte 10 weist dabei ein LED-Modul 12 und eine optische Einheit 14 auf.

Diese beiden Komponenten der LED-Leuchte 10 sind toleranzbehaftet. Um dennoch in einem vorgeschriebenen Abstand zur LED-Leuchte eine geforderte Lichtintensität erzielen zu können, werden während des Montagevorgangs die beiden Komponenten relativ zueinander entlang der optischen Achse 16 der LED-Leuchte 10 verschoben, bis mit Hilfe eines Detektors 18 eine der gewünschten Lichtintensität entsprechende Relativposition gefunden worden ist. Der Detektor 18 befindet sich dabei innerhalb eines insbesondere teleskopierbaren Rohres 20, wobei an dem einen Ende dieses Rohres 20 der Detektor 18 und an dem gegenüberliegenden anderen Ende des Rohres 20 die optische Einheit 14 angeordnet ist. Das Rohr 20 ist vorzugsweise deshalb teleskopierbar, um mit Hilfe des Messaufbaus LED-Leuchten 10 vermessen zu können, die in unterschiedlichen Entfernungen über vorgegebene Lichtintensitäten verfügen sollen. Somit lässt sich also der Abstand des Detektors 18 zur LED-Leuchte 10 durch Teleskopierung des Rohres 20 verstellen.

Das LED-Modul 12 weist eine LED 22 mit einem Die 24 und einer transparenten Vergussmasse 26 auf. Die LED 22 ist auf einer Platine 28 angeordnet, die ggf. Bauelemente zur Ansteuerung der LED 22 und Kontaktelemente für die elektrische Kontaktierung aufweist. Die Platine 28 befindet sich auf einem Kühlkörper 30.

Die optische Einheit 14 weist in diesem Ausführungsbeispiel einen Reflektor 32 auf, der mit einer Lichtaustrittsöffnung 34 und einer LED-Aufnahmeöffnung 36 versehen ist. Der Reflektor 32 ist an seinem mit der Öffnung 36 versehenen Ende mit in diesem Ausführungsbeispiel drei Verbindungsstegen 38 versehen, die in Umfangsrichtung des rotationssymmetrischen Reflektors 32 gleich verteilt angeordnet sind. Den drei Verbindungsstegen 38 sind drei Aussparungen 40 in der Platine 28 zugeordnet. In diese Aussparungen wird Klebermasse 42 appliziert, in die die Enden der Verbindungsstege 38 bei der Montage der LED-Leuchte 10 eingetaucht werden.

Wie bei 44 angedeutet, stehen das Rohr 20 und der Reflektor 32 während der Montage und Vermessung der LED-Leuchte 10 starr, sind also längs der optischen Achse 16 relativ zueinander nicht bewegbar. Demgegenüber lässt sich das LED-Modul 12 in Richtung der optischen Achse 16 vor- und zurückbewegen (siehe den Doppelpfeil 46). Alternativ könnte das LED-Modul 12 feststehend angeordnet und die Einheit aus Reflektor 32 und Rohr 20 sowie Messebene mit Detektor 18 längs der optischen Achse 16 bewegbar sein. Die vorderen Enden der Verbindungsstege 38 des Reflektors 32 bilden zusammen mit den Aussparungen 40 der Platine 28 die Verbindungsstellen 48 zwischen LED-Modul 12 und optischer Einheit 14.

Nach der Applizierung der Klebermassen 42 und Relativausrichtung von LED-Modul 12 und optischer Einheit 14, wie in Fig. 1 gezeigt, wird die LED 22 zum Aussenden von Licht angesteuert. Dieses Licht wird innerhalb der Messebene vom Detektor 18 erfasst. Anschließend wird das LED-Modul 12 verfahren, bis der Detektor 18 eine Lichtintensität erfasst, wie sie in dem vorgeschriebenen Abstand zur LED-Leuchte gefordert wird. Beim Auseinanderbewegen beider Komponenten werden die Klebermassen 42 "in die Länge" gezogen.

Es sei angenommen, dass Fig. 2 diejenige Relativposition von LED-Modul 12 und optischer Einheit 14 zeigt, in der der Detektor 18 die gewünschte Lichtintensität misst. Wie zu erkennen ist, sind das LED-Modul 12 und die optische Einheit 14 durch die Klebermassen 42 miteinander verbunden. Anschließend erfolgt nun die Aushärtung der Klebermassen 42, was in Fig. 3 bei 50 für das Beispiel einer Aushärtung der Klebermassen 42 mit Hilfe von UV-Strahlung gezeigt ist. Nach Aushärtung der Klebermassen 42 ist die Montage der beiden Komponenten der LED-Leuchte 10, nämlich des LED-Moduls 12 und der optischen Einheit 14 abgeschlossen. Danach erfolgt die weitere Herstellung der LED-Leuchte mit Lichtscheibe und ggf. einem Gehäuse, was in der Zeichnung nicht mehr dargestellt ist.

Die Erfindung wurde vorstehend anhand eines Ausführungsbeispiels erläutert, bei dem die LED-Leuchte über eine reflektive optische Einheit in Form des Reflektors 32 verfügt. Anstelle eines Reflektors kann die LED-Leuchte aber auch mit einer Linse (refraktive optische Einheit) versehen sein. Auch kann die LED-Leuchte mit einer optischen Einheit mit refraktiv und reflektiv arbeitenden optischen Elementen auf die erfindungsgemäße Weise montiert/assembliert werden.

## Patentansprüche

1. Verfahren zur Montage einer ein LED-Modul und eine reflektive und/oder refraktive optische Einheit aufweisenden LED-Lese-oder Sitzplatzleuchte für ein Fahrzeug, wie beispielsweise ein Flugzeug oder einen Reisebus, mit den folgenden Schritten:
- Bereitstellen eines LED-Moduls (12), das mindestens eine LED (22) aufweist,
- Bereitstellen einer einen Reflektor und/oder eine Linse aufweisenden optischen Einheit (14) zur Ausleuchtung in einer Messebene durch elektromagnetische Strahlung des LED-Moduls (12) und die optische Einheit (14),
- Anordnen der optischen Einheit (14) und des LED-Moduls (12) zwecks späterer Fixierung aneinander,
- Ansteuern des LED-Moduls (12) zur Aussendung von elektromagnetischer Strahlung zwecks Ausleuchtung in der Messebene,
- Erfassen zumindest eines Teils der auf die Messebene auftreffenden elektromagnetischen Strahlung des LED-Moduls (12) durch einen Detektor (18),
- Bewegen des LED-Moduls (12) relativ zur optischen Einheit (14) und/ oder der optischen Einheit (14) relativ zum LED-Modul (12) entlang der optischen Achse (16), bis der Detektor (18) elektromagnetische Strahlung des LED-Moduls (12) mit einer vorgebbaren Intensität erfasst, und
- Fixieren der optischen Einheit (14) und des LED-Moduls (12) relativ zueinander in ihren aktuellen Relativpositionen.

2. Verfahren nach Anspruch 1, **dadurch gekennzeichnet, dass** bei der Anordnung von LED-Modul (12) und optischer Einheit (14) zwecks späterer Fixierung aneinander aushärtbare Klebermasse (42) auf mechanische Kontaktstellen (46) zwischen dem LED-Modul (12) und der optischen Einheit (14) appliziert wird und dass das LED-Modul (12) und die optische Einheit (14) durch die Klebermasse (42) verbunden bleiben, wenn sie längs der optischen Achse (16) relativ zueinander bewegt werden.

3. Verfahren nach Anspruch 2, **dadurch gekennzeichnet, dass** die Klebermasse (42) mittels UV-Strahlung (50) aushärtbar ist und dass die Fixierung von LED-Modul (12) und optischer Einheit (14) durch UV-Bestrahlung der sich zwischen ihnen erstreckenden Klebermasse (42) erfolgt.

## Claims

1. Method for mounting an LED reading or seat lamp which comprises a LED module and a reflective and/or refractive optical unit for a vehicle such as, for example, an aircraft or a bus, with the following steps:
- providing a LED module (12) which comprises at least one LED (22),
- providing an optical unit (14) comprising a reflector and/or a lens for illumination in a measurement plane by electromagnetic radiation of the LED module (12) and the optical unit (14),
- arranging the optical unit (14) and the LED module (12) for the purpose of later attachment to one another,
- controlling the LED module (12) for transmitting electromagnetic radiation for the purpose of illumination in the measurement plane,
- detection by a detector (18) of at least a portion of the electromagnetic radiation of the LED module (12) incident on the measurement plane,
- moving the LED module (12) relative to the optical unit (14) and/or the optical unit (14) relative to the LED module (12) along the optical axis (16) until the detector (18) detects electromagnetic radiation of the LED module (12) having a predeterminable intensity, and
- attaching the optical unit (14) and the LED module (12) relative to one another in their current relative positions.

2. Method according to Claim 1, **characterized in that**, in the arrangement of LED module (12) and optical unit (14), for the purpose of later attachment to one another, adhesive composition (42) that can be cured is applied to mechanical contact sites (46) between the LED module (12) and the optical unit (14), and **in that** the LED module (12) and the optical unit (14) remain connected by the adhesive composition (42) when they are moved relative to one another along the optical axis (16).

3. Method according to Claim 2, **characterized in that** the adhesive composition (42) can be cured by UV radiation (50) and **in that** the attachment of LED module (12) and optical unit (14) occurs by UV irradiation of the adhesive composition (42) extending between them.

## Revendications

1. Procédé de montage d'une lampe de lecture ou de siège à LED qui comprend un module à LED et une unité optique réflective et/ou réfractive pour un véhicule tel qu'un aéronef ou un bus, avec les étapes suivantes :
- la fourniture d'un module à LED (12) qui comprend au moins une LED (22),
- la fourniture d'une unité optique (14) comprenant un réflecteur et/ou une lentille pour l'illumination dans un plan de mesure par rayonnement électromagnétique du module à LED (12) et de l'unité optique (14),
- l'agencement de l'unité optique (14) et du module à LED (12) en vue d'une attache ultérieure l'un à l'autre,
- le contrôle du module à LED (12) pour la transmission du rayonnement électromagnétique en vue d'une illumination dans le plan de mesure,
- la détection par un détecteur (18) d'au moins une partie du rayonnement électromagnétique du module à LED (12) incidente sur le plan de mesure,
- le déplacement du module à LED (12) par rapport à l'unité optique (14) et/ou de l'unité optique (14) par rapport au module à LED (12) le long de l'axe optique (16) jusqu'à ce que le détecteur (18) détecte le rayonnement électromagnétique du module à LED (12) avec une intensité prédéterminable et
- l'attache de l'unité optique (14) et du module à LED (12) l'un par rapport à l'autre dans leurs positions relatives actuelles.

2. Procédé selon la revendication 1, **caractérisé en ce que** dans l'agencement du module à LED (12) et de l'unité optique (14) en vue d'une attache ultérieure l'un à l'autre, une composition adhésive (42) qui peut être durcie est appliquée aux sites de contact mécanique (46) entre le module à LED (12) et l'unité optique (14) et **en ce que** le module à LED (12) et l'unité optique (14) restent reliés par la composition adhésive (42) lorsqu'ils sont déplacés l'un par rapport à l'autre le long de l'axe optique (16).

3. Procédé selon la revendication 2, **caractérisé en ce que** la composition adhésive (42) peut être durcie par rayonnement ultraviolet (50) et **en ce que** l'attache du module à LED (12) et de l'unité optique (14) apparaît par irradiation ultraviolette de la composition adhésive (42) s'étendant entre eux.
